# EUROPÄISCHE PATENTSCHRIFT

(11) **EP 2 156 748 B1**
(45) Veröffentlichungstag und Bekanntmachung des Hinweises auf die Patenterteilung: **21.09.2011**
(21) Anmeldenummer: 09166041.5
(22) Anmeldetag: 21.07.2009
(51) Int. Cl.: A23L 1/00, A23L 1/22, A23L 1/237

(54) **Zusammensetzung zur Reduzierung des NaCl-Gehaltes in Lebensmitteln**
Composition for reducing the NaCl content in food
Composition destinée à réduire la teneur en NaCl dans des aliments

(30) Priorität: 30.07.2008 US 84818 P
(43) Veröffentlichungstag der Anmeldung: 24.02.2010
(73) Patentinhaber: Symrise AG, 37603 Holzminden (DE)
(72) Erfinder: Muche, Sylvia, 37696, Marienmünster (DE); Barnekow, Rainer, 37696, Marienmünster (DE); Sabater-Lüntzel, Christopher, 37603, Holzminden (DE)
(74) Vertreter: Eisenführ, Speiser & Partner

(56) Entgegenhaltungen:
- JP-A- 11 155 523
- US-A- 4 385 076
- US-A- 4 556 566
- US-A- 5 094 862
- US-A- 5 098 723
- US-A- 6 139 887

## Beschreibung

### Technisches Gebiet

Die vorliegende Erfindung betrifft eine Zusammensetzung zur Reduzierung des Natriumchlorid-Gehaltes in Lebensmitteln, Verfahren zu deren Herstellung und Verwendungen.

### Hintergrund der Erfindung

Ein zu hoher Kochsalzkonsum (Kochsalz und Speisesalz bestehen im Wesentlichen aus Natriumchlorid) insbesondere in der westlichen Ernährung trägt zu einer erhöhten Inzidenz für Bluthochdruck in der Bevölkerung bei. Durch erhöhten Blutdruck können Krankheiten, insbesondere Herz-Kreislauferkrankungen ausgelöst oder gefördert werden (vgl. auch N. Murray, Food Processing 2004 (May), Seiten 21-22).

Andererseits ist der Salzgeschmack, der insbesondere durch Kochsalz verursacht wird, für die geschmackliche Auswahl von Nahrungs- und Genussmitteln sehr wichtig. In sensorischen Tests wird die salzigere Variante häufig bevorzugt. Kochsalz dient zudem als Maskierer für bittere Geschmackseindrücke (Keast, Breslin und Beauchamp, Chimia 2001, 55 (Heft 5), Seiten 441-447) und/oder als allgemeiner Geschmacksverstärker und wird daher in einer Vielzahl von primär nicht-salzigen Nahrungs- und Genussmitteln eingesetzt.

Es ist bekannt, dass bei einer Reduzierung der Kochsalzmenge in einem Lebensmittel sich regelmäßig das gesamte sensorische Profil dieses Lebensmittels verändert. In einigen traditionellen Nahrungs- und Genussmitteln wie Rohwurst oder Brot kann der Salzgehalt ohne starken Verlust des Geschmacks signifikant gesenkt werden (z. B. Meat Science 2005, 70 (Heft 3), Seiten 531-541). In anderen, weniger traditionellen Anwendungen wie Fertigsuppen oder andere Fertignahrungen sowie Knabberartikeln ist die Absenkung des Salzgehaltes dagegen in der Regel schwierig, da der Salzgehalt für den Geschmack der Fertigprodukte vorher oftmals optimiert wurde.

Es ist vom gesundheitlichen Standpunkt erstrebenswert, die tägliche Aufnahme von Kochsalz und insbesondere der Natriumionen zu limitieren. Dabei sollten aber die geschmacklichen Defizite, die durch die Reduktion von Kochsalz verursacht werden, weitgehend vermieden werden, um die Präferenz für das Lebens- und/oder Genussmittel zu erhalten.

Es sind bereits mehrere Stoffe als Kochsalz-reduzierende Mittel (im Folgenden als "Salzersatz" bezeichnet) beschrieben, d. h. Mittel, die es erlauben die Kochsalzmenge in Lebensmitteln zu verringern, ohne den salzigen Geschmack des Lebensmittels entsprechend zu verringern. Eine der ältesten Methoden ist der Ersatz von Natriumchlorid durch Kaliumchlorid.

In einer neueren Veröffentlichung (US 6,541,050) werden Mischungen verschiedener Salze (Kaliumchlorid und andere Sulfate und Chloride) zur Problemlösung vorgeschlagen.

WO 2007/045566 offenbart als Salzersatz bestimmte Mischungen mit salzigem Geschmack, basierend auf (a) einem oder mehreren physiologisch akzeptablen anorganischen Salzen, die nicht Natriumchlorid sind und vorzugsweise natriumfrei sind, (b) einem oder mehreren mono- oder polyvalenten Salzen mehrwertiger Genusssäuren und (c) einer oder mehreren für die Ernährung geeigneten Aminosäuren oder deren Salzen.

US 5,260,091 offenbart die salzverstärkende Wirkung bestimmter Pyrazinderivate, wodurch eine Reduzierung des Kochsalzgehalts in essbaren Zubereitungen ermöglicht wird.

US 5,094,862 beschreibt einen Kochsalz enthaltenden Salzersatz in Granulatform. Dort wird zunächst ein, vorzugsweise mit Lactisol, entsüßtes Kohlenhydrat (z. B. entsüßter kristalliner Zucker) hergestellt, welches als Kernmaterial dient. In einer Wirbelschicht wird dieses entsüßte Kernmaterial anschließend mit einer Überzugslösung enthaltend Kochsalz, z. B. in Form einer 20 Gew.-%igen wässrigen Lösung, in Kontakt gebracht und getrocknet. Auf diese Weise wird gemäß US 5,094,862 ein salzig schmeckendes Granulat erhalten, welches dem natürlichen Kochsalz sensorisch ähnlich ist. Da das salzig schmeckende Granulat gemäß US 5,094,862 mittels eines Wirbelschicht-Trocknungsprozesses hergestellt wird, liegt eine vergleichsweise lange und kostenintensive Prozessführung vor. Zudem stellt der Entsüßungs-Schritt des eingesetzten süßen Kernmaterials, der durchgeführt werden muss, damit der Salzgeschmack insbesondere durch verbleibende süße Aspekte nicht beeinträchtigt bzw. dominiert wird, einen weiteren aufwändigen Prozessschritt dar.

US 2008/0085360 schlägt zur Salzreduktion eine Pulvermischung vor, welches im Wesentlichen Natriumchlorid und ein auf ein Trägermaterial (wie Maltodextrin) aufgebrachtes modifiziertes (z.B. Citronensäure) Chloridsalz umfasst, das nicht Natriumchlorid ist.

Primäre Aufgabe der vorliegenden Erfindung ist die Bereitstellung einer salzig schmeckenden Zusammensetzung als Salzersatz, welche die Natriumchloridmenge bei (annähernd) gleichem Salzgeschmack und vorzugsweise ohne nennenswerte sonstige Geschmackseinbußen erlaubt, wobei eine Reduktion des Gehalts an Natriumchlorid um bis zu 60 Gew.-% angestrebt wird. Das Herstellverfahren für solche Zusammensetzungen soll ferner einfach, kurz und kostengünstig sein.

### Zusammenfassung der Erfindung:

Die Aufgabe der vorliegenden Erfindung wird durch die erfindungsgemäßen Gegenstände gemäß der unabhängigen Ansprüche gelöst.

Eine erste erfindungsgemäße Ausgestaltung betrifft eine frei fleißende Zusammensetzung umfassend oder bestehend aus den folgenden Bestandteilen:
a) einem oder mehreren zum Verzehr geeigneten festen Kernpartikeln,
b) einem oder mehreren zum Verzehr geeigneten fetten Ölen, welche den oder die Kernpartikel ganz oder teilweise benetzt und
c) zum Verzehr geeignetes Salz umfassend oder bestehend aus Natriumchlorid, das auf der Oberfläche des oder der mit fettem Öl benetzten Kernpartikel anhaftet.

Eine zweite erfindungsgemäße Ausgestaltung betrifft ein Verfahren zur Herstellung von frei fleißenden erfindungsgemäßen Zusammensetzungen umfassend oder bestehend aus den folgenden Schritten:
i) Bereitstellen von ein oder mehreren Kernpartikeln als Bestandteil a), ein oder mehreren fetten Ölen als Bestandteil b) und zum Verzehr geeignetes Salz umfassend oder bestehend aus Natriumchlorid als Bestandteil c)
   und
ii) Vorlegen und Fluidisieren von den Kernpartikeln gemäß Bestandteil a) in einen Mischer,
iii) Zuführen von dem oder den fetten Ölen gemäß Bestandteil b) in den Mischer, so dass die Kernpartikel ganz oder teilweise benetzt werden und
iv) Zuführen des Salzes umfassend oder bestehend aus Natriumchlorid gemäß Bestandteil c) in den Mischer, so dass das Salz zumindest teilweise auf der Oberfläche der mit fettem Öl benetzten Kernpartikel aus Schritt iii) anhaftet
   oder
v) Vorlegen und Fluidisieren von den Kernpartikeln gemäß Bestandteil a) und dem Salz umfassend oder bestehend aus Natriumchlorid gemäß Bestandteil c) in einen Mischer und
vi) Zuführen von dem oder den fetten Ölen gemäß Bestandteil b) in den Mischer, so dass die Kernpartikel ganz oder teilweise benetzt werden und das Salz zumindest teilweise auf der Oberfläche der mit fettem Öl benetzten Kernpartikel anhaftet.

Eine dritte erfindungsgemäße Ausgestaltung betrifft ein Lebensmittel zusätzlich umfassend oder bestehend aus erfindungsgemäßen Zusammensetzungen.

Eine vierte erfindungsgemäße Ausgestaltung betrifft die Verwendung von erfindungsgemäßen Zusammensetzungen zur Herstellung von Lebensmitteln.

Eine fünfte erfindungsgemäße Ausgestaltung betrifft die Verwendung von erfindungsgemäßen Zusammensetzungen zur Reduzierung eines Natriumchloridgehaltes in Lebensmitteln.

Bevorzugte Ausgestaltungen der erfindungsgemäßen Ausgestaltungen (Erfindungsgegenstände) werden in den abhängigen Ansprüchen sowie danach folgenden detaillierten Beschreibung dargestellt und sind, sofern sinnvoll, untereinander kombinierbar.

### Detaillierte Beschreibung der Erfindung

Die vorliegende Erfindung beruht auf der überraschenden Erkenntnis, dass mit den erfindungsgemäßen Zusammensetzungen sich der NaCl-Gehalt in (vorzugsweise trockenen) Lebensmitteln (erfindungsgemäßen Lebensmitteln) stark reduzieren lässt, regelmäßig um 20 bis 70 Gew.-%, wobei die besten Resultate bei einer Reduzierung des NaCl-Gehaltes im Bereich von 30 - 60 Gew.-% erreicht werden. Obwohl die Ursachen hierfür noch nicht vollständig geklärt werden konnten, gehen die Erfinder davon aus, dass das oder die zum Verzehr geeigneten fetten Öle gemäß Komponente b) der erfindungsgemäßen Zusammensetzungen neben der haftvermittelnden Funktion ebenfalls geschmacksverstärkende Eigenschaften aufweist, welche sich positiv auf die Rekonstruktion des Salzgeschmacks der erfindungsgemäßen Zusammensetzungen auswirken.

Vorteilhaft ist ferner, dass das erfindungsgemäße Herstellverfahren für die erfindungsgemäßen Zusammensetzungen mittels eines trockenen Mischprozesses durchgeführt wird, das im Gegensatz zu einem Wirbelschicht-Trocknungsprozess, das insbesondere in US 5,094,862 beschrieben wird, eine kürzere und kostengünstigere Prozessführung aufweist. Dazu kommt, dass die Kernpartikel der erfindungsgemäßen Zusammensetzung im Gegensatz zu dem süßen Kernmaterial aus US 5,094,862 nicht entsüßt werden müssen, bevor sie mit den zum Verzehr geeigneten Salzen umfassend oder bestehend aus Natriumchlorid beschichtet werden und dennoch der Salzgeschmack der erfindungsgemäßen Zusammensetzungen nicht durch die Kernpartikel sensorisch beeinträchtigt werden. Die Forscher nehmen an, dass diese überraschende Wirkung auf der geschmacksverstärkenden Eigenschaft des oder der zum Verzehr geeigneten fetten Öle gemäß Komponente b) der erfindungsgemäßen Zusammensetzungen beruht.

Im Sinne der vorliegenden Erfindung beziehen sich die Begriffe "fest" bzw. "flüssig" dabei jeweils auf den Aggregatzustand bei 25°C und 1013 mbar.

Im Sinne der vorliegenden Erfindung gibt der Dxx-Wert den Partikeldurchmesser an, bei dem volumenbezogen xx Vol.-% der Partikel eines Partikeldurchmessers einen kleineren oder gleichen Durchmesser besitzen. Der mittlere Partikeldurchmesser entspricht demnach einem D50-Wert. Des Weiteren bedeutet beispielsweise ein D90-Wert von 400 µm, dass 90 Vol.-% der Partikel einen Durchmesser von kleiner oder gleich 400 µm besitzen. Üblicherweise hat Kochsalz für Snacks oder Pommes Frites einen D90-Wert im Bereich von 200 - 600 µm.

Gewichtsprozentanteile (Gew.-%) in Bezug auf die erfindungsgemäßen Gegenstände, d. h. den erfindungsgemäßen Zusammensetzungen oder Lebensmitteln, sind jeweils auf das Gesamtgewicht der Trockenmasse der jeweiligen Zusammensetzung bzw. dem jeweiligen Lebensmittel bezogen.

Gemäß einer bevorzugten Ausgestaltung des ersten Erfindungsgegenstandes umfasst oder besteht die erfindungsgemäße Zusammensetzung zusätzlich aus folgenden Bestandteilen:
d) einem oder mehreren Fließmitteln und/oder
e) Aroma.

In einer weiteren bevorzugten Ausgestaltung des ersten Erfindungsgegenstandes ist die erfindungsgemäße Zusammensetzung **dadurch gekennzeichnet,** dass
- der oder die erfindungsgemäß einzusetzenden Kernpartikel gemäß Bestandteil a) zu 20 bis 80 Gew.-%, bevorzugt 30 bis 60 Gew.-%, und/oder
- der oder die erfindungsgemäß einzusetzenden fetten Öle gemäß Bestandteil b) zu 0,2 bis 10 Gew.-%, bevorzugt 5 bis 8 Gew.-%, besonders bevorzugt 1 bis 6 Gew-%, und/oder
- das erfindungsgemäß einzusetzende zum Verzehr geeignete Salz umfassend oder bestehend aus Natriumchlorid als Bestandteil c) zu 10 bis 75 Gew.- %, bevorzugt 30 bis 60 Gew.-%, und/oder
- der oder die erfindungsgemäß einzusetzenden Fließmittel gemäß Bestandteil d) zu 0 bis 2 Gew.-%, bevorzugt 0,1 bis 1 Gew.-%, besonders bevorzugt 0,2 bis 0,7 Gew.-%, und/oder
- das erfindungsgemäß einzusetzende Aroma gemäß Bestandteil e) zu 0 bis 10 Gew.-%, bevorzugt 0,05 bis 8 Gew.-%, besonders bevorzugt 0,01 bis 5 Gew.-%, jeweils bezogen auf die Trockenmasse der erfindungsgemäßen Zusammensetzung vorliegen.

Die Partikelgröße der erfindungsgemäßen Zusammensetzungen hat vorzugsweise einen D90-Wert im Bereich von 500 - 100 µm, besonders bevorzugt im Bereich von 600 - 900 µm.

In einer weiteren bevorzugten Ausgestaltung des ersten Erfindungsgegenstandes sind erfindungsgemäße Zusammensetzungen "sehr gut fließend".

Die Fließfähigkeit eines erfindungsgemäßen Schüttguts kann durch den Schüttwinkel charakterisiert werden. Bei einem Schüttwinkel von kleiner als 30° spricht man von "sehr gut fließend", bei einem Schüttwinkel im Bereich von 30° bis 45° spricht man von "frei fließend" und bei einem Schüttwinkel von größer als 45° von "schlecht fließend". Dabei ist zu bemerken, dass bei stark verklumpten bzw. verbackenen Formen gar kein Schüttwinkel bestimmbar ist, da in solchen Fällen keine Fließfähigkeit gegeben ist. Der Schüttwinkel kann gemäß DIN ISO 4324 bestimmt werden.

Im Folgenden werden die Bestandteile a) bis e) sowie deren bevorzugte Ausgestaltungen der erfindungsgemäßen Zusammensetzungen des ersten Erfindungsgegenstandes beschrieben und sind mit den vorstehend beschriebenen (bevorzugten) Ausgestaltungen des ersten Erfindungsgegenstandes sowie untereinander, soweit sinnvoll, beliebig kombinierbar:

### Bestandteil a) - erfindungsgemäß einzusetzende Kernpartikel

Der erfindungsgemäß einzusetzende Kernpartikel wird gewählt aus der Gruppe der zum Verzehr geeigneten Feststoffe und wird vorzugsweise gewählt aus der Gruppe bestehend aus getrockneten und gemahlenen Lebensmitteln, Gemüsepulver wie Kartoffelpulver, Pulver von Maniok, Tapioka, Getreidepulver, insbesondere von Hafer, Weizen, Mais und/oder Hirse, Ballaststoffen (z.B. Obst- oder Gemüsefasern), Mineralstoffen, festen (kristallinen) Fetten, festen (kristallinen) Wachsen, kristalline Zucker und/oder Fruchtpulvern.

Der erfindungsgemäß einzusetzende feste Kernpartikel ist besonders bevorzugt gewählt aus der Gruppe bestehend aus Kartoffelpulver, Pulver von Maniok, Tapioka, Getreidepulver, insbesondere von Hafer, Weizen, Mais und/oder Hirse.

Bevorzugte Größe des erfindungsgemäß einzusetzenden Kernpartikels: Bevorzugt weisen die erfindungsgemäß einzusetzenden Kernpartikel einen D50-Wert im Bereich von 200 - 750 µm auf, weiter bevorzugt im von Bereich von 250 - 550 µm, besonders bevorzugt im Bereich von 300 - 450 µm.

Werden Kernpartikel mit einem deutlich niedrigeren D50-Wert als 200 µm eingesetzt, werden verstärkt Verklumpungen von Kernpartikel und Kochsalz beobachtet. Dies ist unerwünscht, da die resultierenden Partikel der erfindungsgemäßen Zusammensetzung nicht frei fließend sind und der Salzgeschmack nicht zufrieden stellend ist. Solche Kernpartikel entsprechen nicht der erfindungsgemäßen Größenverteilung.

Besonders bevorzugt bei der Größe der erfindungsgemäß einzusetzenden Kernpartikel ist dabei ferner eine (sehr) enge Verteilungskurve der Partikelgröße der eingesetzten Kernpartikel, vorzugsweise so, dass 80 Vol.-% oder mehr der erfindungsgemäß einzusetzenden Kernpartikel eine Partikelgröße im Bereich von 100 µm - 1000 µm, weiter bevorzugt im Bereich von 125 µm - 800 µm aufweisen.

Die besten Ergebnisse wurden erzielt für erfindungsgemäß einzusetzende Kernpartikel einem D90-Wert von größer oder gleich 500 µm.

### Bestandteil b) - erfindungsgemäß einzusetzendes fettes Öl als Überzugsmittel

Das Überzugsmittel "fettes Öl" ist erfindungsgemäß aus der Gruppe der zum Verzehr geeigneten fetten Öle gewählt und dient dazu, den erfindungsgemäßen Kernpartikel soweit zu benetzen, dass das zum Verzehr geeignete Salz umfassend oder bestehend aus Natriumchlorid auf der Oberfläche des Kernpartikels anhaften kann und ohne dass eine unerwünschte Verölung auftritt.

Unter "fettem Öl" wird im Sinne der vorliegenden Erfindung ein Triglycerid, insbesondere mit gleichen oder verschiedenen C₄- bis C₁₈-Fettsäure-Resten verstanden.

Als fette Öle eignen sich erfindungsgemäß bevorzugt Speiseöle, weiter bevorzugt Pflanzenöle. Geeignete fette Öle werden besonders bevorzugt ausgewählt aus der Gruppe bestehend aus Borretschöl, Distelöl, Erdnussöl, Haselnussöl, Kokosöl, Leinöl, Maiskeimöl, Makadamianussöl, Mandelöl, Olivenöl, Pekannussöl, Pistazienkernöl, Rapsöl, Reiskeimöl, Sesamöl, Sojaöl, Sonnenblumenöl, Walnussöl oder Weizenkeimöl. Hiervon sind Erdnussöl, Kokosöl, Sonnenblumenöl und Rapsöl ganz besonders bevorzugt.

In einer weiteren erfindungsgemäß bevorzugten Ausgestaltung werden fraktionierte Pflanzenöle verwendet, die hauptsächlich C₆- bis C₁₀-Fettsäure-Reste aufweisen. Besonders geeignet sind die (weitgehend) geschmacksneutralen Triglyceride mit gleichen oder verschiedenen C₆-bis C₁₀-Fettsäure-Resten (sogenannte MCT-Öle, medium-chaintriglycerides), die zudem hervorragende spreitende und benetzende Eigenschaften aufweisen.

Ferner haben die MCT-Öle den Vorteil, dass sie nicht hygroskopisch sind und nicht zu unerwünschter Agglomeration der erfindungsgemäßen Partikel führen.

### Bestandteil c) - erfindungsgemäß einzusetzendes Salz umfassend oder bestehend aus Natriumchlorid

Unter zum Verzehr geeignetem Salz umfassend oder bestehend aus Natriumchlorid wird im Rahmen der vorliegenden Erfindung bevorzugt Kochsalz, d. h. Speisesalz oder Tafelsalz verstanden. Speisesalz oder Tafelsalz ist das in der Küche für die menschliche Ernährung benutzte Salz. Es besteht hauptsächlich (zu 97 Gew.-% oder mehr) aus Natriumchlorid mit bis zu 3 Gew.-% Verunreinigungen durch andere Salze wie unter anderem Magnesiumchlorid und Sulfate enthalten. Zur Verbesserung der Eigenschaften kann Kochsalz ferner geringe Mengen anderer Stoffe wie z.B. Fluorid, Jodid, Fließhilfsmittel, Vitamine enthalten.

Das erfindungsgemäß einzusetzende Kochsalz kann unterschiedlicher Herkunft sein, so können z.B. auch Steinsalz, Siedesalz oder als Meersalz eingesetzt werden. Kochsalz ist in unterschiedlichen Körnungen kommerziell verfügbar, im Bedarfsfalle kann die Partikelgröße und bevorzugte Partikelgrößenverteilung durch mahlen und sieben eingestellt werden.

Bevorzugte Größe des erfindungsgemäß einzusetzenden Kochsalzes:

Bevorzugt weist das erfindungsgemäß einzusetzende Kochsalz einen D90-Wert im Bereich von 20 - 50 µm auf, bevorzugt im von Bereich von 30 - 35 µm.

Das Kochsalz wird auf die Oberfläche des mit flüssigem Überzugsmittel behandelten Trägerstoffes aufgebracht.

### Optionaler Bestandteil d) - erfindungsgemäß einzusetzende Fließhilfsmittel (Anticaking agent)

Optional werden die erfindungsgemäßen Zusammensetzungen mit einem Fließhilfsmittel gemischt. Unter einem Fließhilfsmittel versteht man im Sinne der vorliegenden Erfindung feste Stoffe/Verbindungen, die - auch in Gemischen mit anderen Mitteln wie Emulgatoren, Antioxidantien und Konservierungsstoffen - direkt auf die feste Oberfläche von Produkten gebracht werden. Fließhilfsmittel zählen in technologischer Hinsicht zu Hilfsmitteln, die neben der Verbesserung oder Erhaltung der Rieselfähigkeit das Anhaften oder Ankleben eines Lebensmittels an einer Form, Unterlage, Umhüllung oder das Verkleben untereinander verhindern. Bevorzugte Fließhilfsmittel im Rahmen der vorliegenden Erfindung sind Magnesiumoxid, Na-, K- oder Ca-Verbindungen der Speisefettsäuren, Magnesiumstearat, Kieselsäure (vorzugsweise Fällungskieselsäure oder pyrogenes Siliciumdioxid), Ca-Silikate, Tricalciumphosphat, Carboxymethylcellulose und mikrofeine Pflanzenfasern (vorzugsweise Weizen- oder Haferfasern).

Ein besonders bevorzugtes erfindungsgemäß einzusetzendes Fließmittel ist (vorzugsweise pyrogenes) Siliciumdioxid mit einer spezifischen Oberfläche im Bereich von 50 bis 500 m²/g, bevorzugt im Bereich von 100 bis 400 m²/g (Oberfläche berechnet nach BET, in Anlehnung an DIN 66131).

Erfindungsgemäß einzusetzende Fällungskieselsäuren (precipitated silicas, Summenformel: SiO₂) können beispielsweise mittels Fällungsverfahren oder Hydrothermal-Verfahren hergestellt werden und sind unter anderem von der Degussa-Hüls AG (heute EVONIC) unter den Handelsnamen Sipernat^{®} oder Carplex^{®} in unterschiedlichen Qualitäten erhältlich. Fällungskieselsäuren weisen vorteilhaft eine spezifische Oberfläche im Bereich von 50 bis 500 m²/g nach BET und Teilchengrößen im Bereich von 3 bis 100 µm auf. Besonders bevorzugt einzusetzende Fällungskieselsäuren sind amorph und haben Teilchengrößen im Bereich von 3 bis 50 µm.

Amorphes, hochdisperses pyrogenes Siliciumdioxid als erfindungsgemäß einzusetzendes Fießmittel kann beispielsweise mittels Knallgasflamme oder im Lichtbogen hergestellt werden. Hochdisperse hydrophobe oder hydrophile Siliciumdioxide sind beispielsweise von der Degussa-Hüls AG unter dem Handelsnamen Aersosil^{®} in unterschiedlichen Qualitäten erhältlich. Die Größe der kugelförmigen Primärteilchen des Siliciumdioxids liegt dabei regelmäßig im Bereich von 7 bis 40 nm. Diese Primärteilchen bilden Agglomerate und Aggregate (siehe DIN 53206), weisen aber im Gegensatz zu Fällungskieselsäuren keine definierte Agglomeratgröße auf. Vorzugsweise weist das hochdisperse Siliciumdioxid als erfindungsgemäß einzusetzendes Fießmittel eine spezifische Oberfläche im Bereich von 50 bis 400 m²/g, bevorzugt im Bereich von 100 bis 300 m²/g nach BET auf. Die mittlere Größe der Primärpartikel liegt vorzugsweise im Bereich von 7 bis 20 nm, bevorzugt im Bereich von 7 bis 16 nm.

Weitere Informationen zu im Rahmen der Erfindung einsetzbaren Siliciumdioxiden können beispielsweise der EP 0 331 425 und der Sivento - Produktbroschüre zu "Aerosil^{®} - Pyrogene Kieselsäuren" der Degussa-Hüls AG (heute EVONIC) entnommen werden.

### Optionaler Bestandteil e) - erfindungsgemäß einzusetzendes Aroma

In der Regel handelt es sich bei dem erfindungsgemäß einzusetzenden Aroma um Mischungen von zwei oder mehreren Aromastoffen sowie optional Geschmackstoffen und gegebenenfalls Hilfs- und Trägerstoffen.

In bevorzugten Ausführungsformen der erfindungsgemäßen Zusammensetzungen wird das Aroma (Bestandteil e)) zusammen mit bzw. als weiterer Bestandteil des fetten Öls (Bestandteil b)) eingesetzt, um die erfindungsgemäßen Zusammensetzungen zu aromatisieren. Das Aroma kann dabei fest oder flüssig sein, bevorzugt ist das Aroma flüssig.

In bevorzugten Ausführungsformen enthalten die erfindungsgemäßen Zusammensetzungen ein Aroma, um den Geschmack und/oder Geruch der Zubereitung abzurunden und/oder zu verfeinern. Geeignete Aromen werden bevorzugt ausgewählt aus der Gruppe bestehend aus synthetischen, natürlichen oder naturidentischen Aroma-, Riech- und Geschmacksstoffen und deren Gemische, ätherischen Ölen, Reaktionsaromen, Raucharomen oder andere aromagebende Zubereitungen. Dabei kann es sich weiterhin vorzugsweise um Protein[teil]hydrolysate, Grillaromen, Pflanzenextrakte, Gewürze, Gewürzzubereitungen, Gemüse und/oder Gemüsezubereitungen handeln, die ferner geeignete Hilfs- und Trägerstoffe enthalten können. Insbesondere sind erfindungsgemäß bevorzugt Aromen oder deren Bestandteile geeignet, die einen röstigen, fleischigen (insbesondere Huhn, Fisch, Meerestiere, Rind, Schwein, Lamm, Schaf, Ziege), gemüsigen (insbesondere Tomate, Zwiebel, Knoblauch, Sellerie, Lauch, Pilze, Auberginen, Seetang), einen würzigen (insbesondere schwarzer und weißer Pfeffer, Chili, Paprika, Kardamom, Muskat, Piment, Senf und Senf-Produkte), gebratenenen, hefigen, gesottenen, fettigen, salzigen und/oder scharfen Aromaeindruck verursachen und somit einen würzigen und salzigen Eindruck verstärken können.

Ätherische Öle, die erfindungsgemäß Bestandteil des Aromas sein können, werden vorzugsweise gewählt aus der Gruppe bestehend aus Anisöl; Baldrianöl; Basilikumöl; Beifußöl; Bergamotteöl; Bittermandelöl; Bohnenkrautöl; Buccoblätteröl; Campheröl; Canangaöl; Cardamomenöl; Cascarillaöl; Cassiaöl; Citronellöl; Citronenöl; Corianderöl; Cuminöl; Dillkrautöl; Dillsamenöl; Estragonöl; Eucalyptus-citriodora-Öl; Eucalyptusöl; Fenchelöl; Grapefruitöl; Ingweröl; Kamillenöl blau; Kamillenöl römisch; Krauseminzöl; Kümmelöl; Lemongrasöl; Liebstocköl; Limettenöl destilliert; Limettenöl gepresst; Lorbeerblätteröl; Macisöl; Majoranöl; Mandarinenöl; Muskatnußöl; Nelkenblätteröl; Nelkenblütenöl; Orangenöl; Origanumöl; Petersilienblätteröl; Petersiliensamenöl; Pfefferminzöl; Pfefferöl; Pimentöl; Rosmarinöl; Salbeiöl dalmatinisch; Salbeiöl spanisch; Selleriesamenöl; Sternanisöl; Thymianöl; Vanilleextrakt; Wacholderbeeröl; Wintergrünöl; Zimtblätteröl; Zimtrindenöl sowie Fraktionen davon.

Das erfindungsgemäß einzusetzende Aroma kann dabei in manchen Fällen vorzugsweise sensorisch dem Lebensmittel, auf welches die erfindungsgemäßen Zusammensetzungen später aufgebracht werden sollen, (weitgehend) entsprechen. So kann beispielsweise bei der Aufbringung von erfindungsgemäßen Zusammensetzungen auf Kartoffelchips vorzugsweise ein frittiertes Kartoffelaroma, bei der Aufbringung auf Erdnussflips vorzugsweise ein frittiertes Maisaroma verwendet werden.

Die erfindungsgemäß einzusetzende Aromamenge liegt vorzugsweise im Bereich von 0,001 bis 10 Gew.-%, bevorzugt zu 0,005 bis 8 Gew.-%, weiter bevorzugt zu 0,01 bis 5 Gew.-%, jeweils bezogen auf die Trockenmasse (d.h. wasserfreie Masse) der erfindungsgemäßen Zusammensetzung.

Im Rahmen der vorliegenden Erfindung werden bevorzugt einzusetzende Einzel-Aromastoffe ausgewählt aus der Gruppe bestehend aus:

Acetaldehyd, Acethylmethylcarbinol, Acetophenon, Allylcapronat, alpha lonon, beta lonon, Anisaldehyd, Anisylacetat, Anisylformiat, Benzaldehyd, Benzothiazol, Benzylacetat, Benzylacetat, Benzylalkohol, Benzylbenzoat, beta Ionon, Butylbutyrat, Butylcapronat, Butylidenphthalid, Caprinsäure, Capronsäure, Caprylsäure, Carvon, Camphen Caryophyllen, Cineol, Cinnamylacetat, Citral, Citronellol, Citronellal, Citronellylacetat, Cyclohexylacetat, Cymol, Damascon, Decalacton, Diacetyl, Dihydrocumarin, Dimethylanthranilat, Dimethylanthranilat, Dodecalacton, Ethoxyethylacetat, Ethylacetat, Ethylbuttersäure, Ethylbutyrat, Ethylcaprinat, Ethylcapronat, Ethylcrotonat, Ethylformiat, Ethylfuraneol, Ethylguajakol, Ethylisobutyrat, Ethylisovalerianat, Ethyllactat, Ethyllactat, Ethylmaltol, Ethylmethylbutyrat, Ethylpropionat, Eucalyptol, Eugenol, Ethylheptylat, 1-(4'-Hydroxyphenyl)-2-butanon (Frambinon^{®}), gamma-Decalacton, Geraniol, Geranylacetat, Geranylacetat, Grapefruitaldehyd, Methyldihydrojasmonat (Hedion^{®}), Heliotropin, 2-Heptanon, 3-Heptanon, 4-Heptanon, trans-2- Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cic-3-Hexenylcapronat, trans-2-Hexenylcapronat,cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Maltol, I-Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans,2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), Furaneol^{®} (2,5-Dimethyl-4-hydroxy-3(2H)-furanon) und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalalcton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, Mercapto-3-methyl-1-butanol 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 2,3-Butandion, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Dimethylsulfid, Trimethylamin, Zimtaldehyd, Zimtalkohol, Methylsalicylat, Isopulegol sowie - soweit möglich - deren cis/trans-Isomere, Stereoisomere, Enantiomere, Diastereomere und Epimere.

Bevorzugt enthalten die erfindungsgemäß einzusetzenden Aromen mehr als einen der genannten Aromastoffe, vorzugsweise zwei, drei, vier, fünf, sechs, sieben, acht, neun, zehn oder mehr der genannten Aromastoffe.

Der zweite Erfindungsgegenstand betrifft ein Verfahren zur Herstellung von erfindungsgemäßen Zusammensetzungen.

Demnach kann das erfindungsgemäße Herstellverfahren gemäß Schritten v) und vi) so durchgeführt werden, dass die erfindungsgemäß einzusetzenden Kernpartikel und das zum Verzehr geeignete Salz umfassend oder bestehend aus Natriumchlorid in einem erfindungsgemäß einzusetzenden Mischer, vorzugsweise einem fluidisierenden Mischer, vorgelegt und anschließend mit dem zugeführten fetten Öl gemischt werden.

In einer alternativen Ausgestaltung des zweiten Erfindungsgegenstandes mit Schritte ii) bis iv) werden zuerst die erfindungsgemäß einzusetzenden Kernpartikel in einem erfindungsgemäß einzusetzenden Mischer, vorzugsweise einem fluidisierenden Mischer, vorgelegt, anschließend die fetten Öle zugeführt, so dass die Kernpartikel ganz oder teilweise benetzt werden und anschließend wird das zum Verzehr geeignete Salz umfassend oder bestehend aus Natriumchlorid in den Mischer zugeführt, so dass das Salz zumindest teilweise auf der Oberfläche der mit dem fetten Öl benetzten Kernpartikel anhaftet. Da mit diesem zweiten alternativen Verfahren die besten Ergebnisse im Hinblick auf die Reduktion des NaCl-Gehaltes erzielt werden, ist die zweite Ausgestaltung bevorzugt.

Typische erfindungsgemäß einzusetzende Mischer sind z. B. Pflugscharmischer (insbesondere solche des Herstellers Lödige) bzw. Mehrstromfluidmischer (insbesondere solche des Herstellers Gericke). Nach dem Fluidisieren der Kernpartikel durch den Mischer wird mittels einer Düse das (gegebenenfalls aromatisierte) fette Öl auf die Kernpartikel aufgesprüht. Hiernach wird das Kochsalz zu der (fluidisierten) Mischung aus Kernpartikel und fettem Öl gegeben. Hierdurch kommt es zur Verteilung und zur Adhäsion von Kochsalz auf den Kernpartikeln.

Gemäß einer bevorzugten Ausgestaltung des zweiten Erfindungsgegenstandes ist das erfindungsgemäße Verfahren **dadurch gekennzeichnet, dass** zusätzlich ein oder mehrere Fließmittel, also Bestandteil d) und/oder Aroma als Bestandteil e) bereitgestellt werden und
- das Aroma gemäß Bestandteil e) mit dem oder den fetten Ölen gemäß Bestandteil b) gemischt werden, bevor das fette Öl gemäß Schritt iii) oder vi) dem Mischer zugeführt wird und/oder
- die Fließmittel gemäß Bestandteil d) mit den in Schritt iv) oder vi) erhaltenen Zusammensetzungen gemischt werden.

In dem erfindungsgemäß bevorzugten Herstellungsverfahren wird ein unbeheizter Mischer bei Raumtemperatur verwendet. Dabei werden bevorzugt Umgebungstemperaturen von 10°C bis 30°C eingestellt, besonders bevorzugt Umgebungstemperaturen von 15°C bis 20°C.

Die Gesamtmischzeit für ein erfindungsgemäßes Herstellungsverfahren hängt üblicherweise von der Fluidisierung der Komponenten a) bis c) und ggf. der weiteren Komponenten d) und e) der erfindungsgemäßen Zusammensetzung ab, d. h. sie ist u. a. abhängig von den verwendeten Mischern und der Beschaffenheit der eingesetzten Rohstoffe der jeweilig vorstehenden Komponenten. In einer bevorzugten Ausgestaltung des erfindungsgemäßen Herstellverfahrens beträgt die Gesamtmischzeit ≤ 10 Minuten.

Der dritte Erfindungsgegenstand betrifft erfindungsgemäße Lebensmittel. Im Folgenden werden die bevorzugten Ausgestaltungen der erfindungsgemäß einzusetzenden Lebensmittel beschrieben.

Es wurde gefunden, dass die erfindungsgemäßen Zusammensetzungen insbesondere z. B. bei würzigen Lebensmitteln wie Kartoffelchips, Erdnussflips, Snacks oder Extrudaten auf Kartoffelbasis, Pommes Frites, Crackern, Popkorn, Knabbergebäck den Salzgeschmack, besonders hierbei den Ersteindruck (Impact), aber auch im weiteren Geschmacksverlauf imitieren und/oder verstärken können. Das Geschmackserlebnis in Bezug auf Salzigkeit wurde für erfindungsgemäße Lebensmittel sensorisch als angenehm empfunden und in vielen Fällen gegenüber den nicht Kochsalz-reduzierten Lebensmitteln sogar bevorzugt.

Die erfindungsgemäßen Zusammensetzungen lassen sich in einer weiteren bevorzugten Ausgestaltung vorteilhaft mit Gewürzen, Aromen und Kräutern kombinieren und mischen. Derartige erfindungsgemäße Zusammensetzungen werden auch "Würzmischungen" genannt.

Selbstverständlich können die erfindungsgemäßen Zusammensetzungen auch mit variablen Mengen an erfindungsgemäß einzusetzendem Kochsalz oder anderen Salzen, Gewürzen, Kräutern, Trockenaromen (z. B. sprühgetrocknete oder granulierte Aromen) oder auch anderen Natriumsalzen gemischt werden und zusammen mit diesen verarbeitet bzw. auf Lebensmitteloberflächen aufgebracht werden.

Es ist bevorzugt, die erfindungsgemäßen Zusammensetzungen auf festen Lebensmitteloberflächen mit zumindest einer größeren Oberfläche aufzubringen. Typischerweise haben diese erfindungsgemäß einzusetzenden Lebensmittel eine Länge von zumindest 5 mm, meist liegt die Länge im Bereich von 10 bis 200 mm.

Bevorzugt werden erfindungsgemäße Zusammensetzungen auf kohlenhydratreiche Lebensmittel wie z. B. Mehl- oder Stärkeprodukte, insbesondere Backwaren, frittierte Lebensmittel oder getrocknete extrudierte Lebensmittel aufgebracht. Typischerweise werden die erfindungsgemäßen Zusammensetzungen auf Gebäck, Dauerbackwaren oder Snacks wie beispielsweise Kräcker, Laugengebäck, Kekse, Kartoffel- oder Maischips (z. B. Tortilla-Chips), Weizenmehlprodukte, (z. B. Gebäckstangen, Croutons, Brotchips, Zwieback, extrudierte und nicht-extrudierte Knäckebrote) aufgebracht. Übliche Formen der erfindungsgemäß einzusetzenden Lebensmittel sind Dreiecke, Quadrate, Rechtecke, Trapeze, Kegel, Würfel, Quader, Zylinder, Spiralen, Stangen, Sphären, Scheiben, Streifen, Balken, Kreise, Kugeln, Ovale, Schalen, Pyramiden, Oktaeder, Prismen oder Ellipsen. Die Oberflächen können jedoch auch in sonstiger beliebiger Form vorliegen. Bei Snacks sind beispielsweise auch Tierformen wie Krokodile, Fische oder Kängurus denkbar.

Bevorzugt weist die Oberfläche eines erfindungsgemäßen Lebensmittels, auf oder an der die erfindungsgemäßen Zusammensetzungen aufgebracht sind, einen geringen Wassergehalt auf. Besonders bevorzugt werden die erfindungsgemäßen Zusammensetzungen auf ein getrocknetes, gebackenes oder frittiertes Lebensmittel aufgebracht, dessen Oberfläche (z. B. Kruste) einen Wassergehalt von kleiner oder gleich 15 Gew.-%, weiter bevorzugt von kleiner oder gleich 10 Gew.-%, aufweist.

Optionale Bestandteile erfindungsgemäßer fester Lebensmittel, auf deren Oberfläche die erfindungsgemäßen Zusammensetzungen aufgebracht sind, können übliche Grund-, Hilfs- und Zusatzstoffe für Lebens-, Nahrungs- oder Genussmittel sein, z. B. Wasser, Gemische frischer oder prozessierter, pflanzlicher oder tierischer Grund- oder Rohstoffe (z. B. rohes, gebratenes, getrocknetes, fermentiertes, geräuchertes und/oder gekochtes Fleisch, Knochen, Knorpel, Fisch, Gemüse, Früchte, Kräuter, Nüsse, Gemüse- oder Fruchtsäfte oder -pasten oder deren Gemische), verdauliche oder nicht verdauliche Kohlenhydrate (z. B. Saccharose, Maltose, Fructose, Glucose, Dextrine, Amylose, Amylopektin, Inulin, Xylane, Cellulose, Tagatose), Zuckeralkohole (z.B. Sorbit, Erythritol), natürliche oder gehärtete Fette (z. B. Talg, Schmalz, Palmfett, Kokosfett, gehärtetes Pflanzenfett), Öle (z.B. Sonnenblumenöl, Erdnussöl, Maiskeimöl, Olivenöl, Fischöl, Sojaöl, Sesamöl), Fettsäuren oder deren Salze (z. B. Kaliumstearat), proteinogene oder nicht-proteinogene Aminosäuren und verwandte Verbindungen (z.B. γ-Aminobuttersäure, Taurin), Peptide (z. B. Glutathion), native oder prozessierte Proteine (z.B. Gelatine), Enzyme (z. B. Peptidasen), Nucleinsäuren, Nucleotide, Geschmackskorrigenzien für unangenehme Geschmackseindrücke, geschmacksmodulierende Stoffe (z. B. Inositolphosphat, Nucleotide wie Guanosinmonophosphat, Adenosinmonophosphat oder andere Stoffe wie Natriumglutamat oder 2-Phenoxypropionsäure), Emulgatoren (z. B. Lecithine, Diacylglycerole, Gummi arabicum), Stabilisatoren (z. B. Carageenan, Alginat), Konservierungsstoffe (z. B. Benzoesäure, Sorbinsäure), Antioxidantien (z. B. Tocopherol, Ascorbinsäure), Chelatoren (z.B. Citronensäure), organische oder anorganische Säuerungsmittel (z. B. Essigsäure, Phosphorsäure), zusätzliche Bitterstoffe (z. B. Chinin, Coffein, Limonin, Amarogentin, Humolone, Lupolone, Catechine, Tannine), die enzymatische Bräunung verhindernde Stoffe (z. B. Sulfit, Ascorbinsäure), ätherische Öle, Pflanzenextrakte, natürliche oder synthetische Farbstoffe oder Farbpigmente (z. B. Carotinoide, Flavonoide, Anthocyane, Chlorophyll und deren Derivate), Gewürze, trigeminal wirksame Stoffe oder Pflanzenextrakte, enthaltend solche trigeminal wirksamen Stoffe, synthetische, natürliche oder naturidentische Aromastoffe oder Riechstoffe, Geruchs- oder Geschmackskorrigentien sowie modulierende Aroma- und/oder Geschmackstoffe.

Erfindungsgemäß einzusetzende Geschmackskorrigentien und modulierende Aroma- und/oder Geschmackstoffe werden vorzugsweise ausgewählt aus der Gruppe bestehend aus Nucleotiden, insbesondere Adenosin-5'-monophosphat, Cytidin-5'-monophosphat, Inosin-5'-monophosphat, und deren pharmazeutisch akzeptablen Salzen; Lactisolen; 2,4-Dihydroxybenzoesäure; 3-Hydroxybenzoesäure; Natriumsalzen, vorzugsweise Natriumchlorid, Natriumlactat, Natriumcitrat, Natriumacetat, Natriumgluconoat; Hydroxyflavanone, insbesondere solche gemäß EP-A 1 258 200 (z. B. Eriodictyol, Homoeriodictyol oder deren Natriumsalze), Hydroxybenzoesäureamiden, vorzugsweise 2,4-Dihydroxybenzoesäurevanillylamid, 2,4-Dihydroxybenzoesäure-*N*-(4-hydroxy-3-methoxybenzyl)amid, 2,4,6-Trihydroxybenzoesäure-*N*-(4-hydroxy-3-methoxybenzyl)amid, 2-Hydroxy-benzoesäure-*N-*4-(hydroxy-3-methoxybenzyl)amid, 4-Hydroxybenzoesäure-*N-*(4-hydroxy-3-methoxybenzyl)-amid, 2,4-Dihydroxybenzoesäure-*N-*(4-hydroxy-3-methoxybenzyl)amid-Mono-natriumsalz, 2,4-Dihydroxybenzoesäure-*N*-2-(4-hydroxy-3-methoxyphenyl)-ethyl-amid, 2,4-Dihydroxybenzoesäure-*N-*(4-hydroxy-3-ethoxybenzyl)amid, 2,4-Dihydroxybenzoesäure-*N*-(3,4-dihydroxybenzyl)amid und 2-Hydroxy-5-methoxy-*N-*[2-(4-hydroxy-3-methoxyphenyl)ethyl]amid; 4-Hydroxybenzoesäurevanillylamid (insbesondere solche wie beschrieben in WO2006/024587, die bezüglich der darin offenbarten entsprechenden Verbindungen auf dem Wege der Verweisung Bestandteil dieser Anmeldung wird); Gemische von Molkeproteinen mit Lecithinen; Hydroxydeoxybenzoinen, wie zum Beispiel 2-(4-Hydroxy-3-methoxyphenyl)-1-(2,4,6-trihydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-methoxyphenyl) ethanon) (insbesondere solche wie beschrieben in WO 2006/106023, die bezüglich der darin offenbarten entsprechenden Verbindungen auf dem Wege der Verweisung Bestandteil dieser Anmeldung wird); Hydroxyphenylalkandionen, wie zum Beispiel Gingerdion-[2], Gingerdion-[3], Gingerdion-[4], Dehydrogingerdion-[2], Dehydrogingerdion-[3], Dehydrogingerdion-[4]) (insbesondere solche wie beschrieben in WO 2007/003527, die bezüglich der darin offenbarten entsprechenden Verbindungen auf dem Wege der Verweisung Bestandteil dieser Anmeldung wird); Diacetyltrimeren (insbesondere solche wie beschrieben in WO 2006/058893, die bezüglich der darin offenbarten entsprechenden Verbindungen auf dem Wege der Verweisung Bestandteil dieser Anmeldung wird); γ-Aminobuttersäuren (insbesondere solche wie beschrieben in WO 2005/096841, die bezüglich der darin offenbarten entsprechenden Verbindungen auf dem Wege der Verweisung Bestandteil dieser Anmeldung wird) und Divanillinen (insbesondere Divanillin wie beschrieben in WO 2004/078302, die bezüglich der darin offenbarten entsprechenden Verbindungen auf dem Wege der Verweisung Bestandteil dieser Anmeldung wird); Bicyclo[4.1.0]heptan-7-carbonsäureamide, insbesondere solche wie beschrieben in WO 2008/046895, die bezüglich der darin offenbarten entsprechenden Verbindungen auf dem Wege der Verweisung Bestandteil dieser Anmeldung wird; Cyclopropancarbonsäure(3-methyl-cyclohexyl)amide, insbesondere solche wie beschrieben in US-Provisional 60/916,589 vom 08.05.2007 sowie den darauf basierenden Dokumenten (Symrise), die bezüglich der darin offenbarten entsprechenden Verbindungen auf dem Wege der Verweisung Bestandteil dieser Anmeldung wird; Aromatische Neo-Menthylamide, insbesondere solche wie beschrieben in US-Provisional Application 60/984,023 vom 31.10.2007 sowie den darauf basierenden Dokumenten (Symrise), die bezüglich der darin offenbarten entsprechenden Verbindungen auf dem Wege der Verweisung Bestandteil dieser Anmeldung wird; Neo-Menthylderivate, insbesondere solche wie beschrieben in der US-Provisional Application 61/061,273 vom 13.06.2008 sowie den darauf basierenden Dokumenten (Symrise), die bezüglich der darin offenbarten entsprechenden Verbindungen auf dem Wege der Verweisung Bestandteil dieser Anmeldung wird.

In bevorzugten Ausführungsformen enthalten erfindungsgemäße Lebensmittel, auf deren Oberfläche erfindungsgemäße Zusammensetzungen aufgebracht sind, weiterhin ein erfindungsgemäß einzusetzendes Aroma, um den Geschmack und/oder Geruch der Zubereitung abzurunden und zu verfeinern.

Das erfindungsgemäß einzusetzende Aroma, das für erfindungsgemäße Lebensmittel geeignet ist, ist insbesondere mit seinen bevorzugten Ausgestaltungen bereits zu dem ersten Erfindungsgegenstand, den erfindungsgemäßen Zusammensetzungen, beschrieben worden.

Die erfindungsgemäß einzusetzende Aromamenge für die erfindungsgemäßen Lebensmittel liegt vorzugsweise im Bereich von 0,0001 bis 5 Gew.-%, weiter bevorzugt im Bereich von 0,005 bis 2 Gew.-%, bezogen auf das erfindungsgemäße Lebensmittel.

### Ausführungsbeispiele

Die vorliegende Erfindung wird im Folgenden durch Ausführungsbeispiele beschrieben, die jedoch den Schutzumfang der erfindungsgemäßen Gegenstände nicht limitieren.

Sofern nicht anders angegeben, beziehen sich alle Angaben auf das Gewicht.

Das Kochsalz (Speisesalz) wurde jeweils vor Einsatz gesiebt.

### Beispiel 1

| | |
|---|---|
| 1000 g | Speisesalz Extrafein [enthält 1 Gew.-% Siliciumdioxid E551 und 8 mg K₄Fe(CN)₄ E536; Partikelgröße D90: 32 µm. Bezugsquelle: Akzo Nobel.] |
| 40 g | Sonnenblumenöl |
| 960 g | Kartoffelpulver [Partikelgröße D50: 383 µm Bezugsquelle: Unilever.] |

960 g Kartoffelpulver werden in einen 5 Liter Lödige Pflugscharmischer vorgelegt, 10 Sekunden vorgemischt und fluidisiert. Ohne Unterbrechung des Mischprozesses wird mittels einer Ein- oder Zweistoffdüse 40 g Sonnenblumenöl (Ölaerosol) auf das fluidisierte Kartoffelpulver gesprüht und anschließend 120 Sekunden nachgemischt. Ohne Unterbrechung des Mischprozesses werden anschließend 1000 g Speisesalz Extrafein zu der Mischung gegeben und die gesamte Mischung weitere 180 Sekunden gemischt.

### Beispiel 2

| | |
|---|---|
| 1000 g | Speisesalz Extrafein [enthält 1 Gew.-% Siliciumdioxid E551 und 8 mg K₄Fe(CN)₄ E536; Partikelgröße D90: 34 µm. Bezugsquelle: Akzo Nobel.] |
| 28 g | Sonnenblumenöl (mit Kartoffelpulver erhitzt und filtriert) |
| 968 g | Kartoffelpulver [Partikelgröße D50: 329 µm Bezugsquelle: KMC.] |
| 4 g | Aerosil^{®} [pyrogene Kieseläure, spez. Oberfläche 200 +/- 5 m²/g; Bezugsquelle: Degussa.] |

968 g Kartoffelpulver werden in einen 5 Liter Lödige Pflugscharmischer vorgelegt, 10 Sekunden vorgemischt und fluidisiert. Ohne Unterbrechung des Mischprozesses wird mittels einer Ein- oder Zweistoffdüse 28 g Sonnenblumenöl (Ölaerosol) auf das fluidisierte Kartoffelpulver gesprüht und anschließend 180 Sekunden nachgemischt. Ohne Unterbrechung des Mischprozesses werden anschließend 1000 g Speisesalz Extrafein zu der Mischung gegeben und die gesamte Mischung weitere 180 Sekunden gemischt bevor zuletzt 4 g des Fließhilfsmittels Aerosil^{®} zugegeben und 30 Sekunden nachgemischt werden.

### Beispiel 3

| | |
|---|---|
| 1000 g | Speisesalz Extrafein [enthält 1 Gew.-% Siliciumdioxid E551 und 8 mg K₄Fe(CN)₄ E536; Partikelgröße D90: 34 µm. Bezugsquelle: Akzo Nobel] |
| 40 g | Sonnenblumenöl (mit Kartoffelpulver erhitzt und filtriert) |
| 956 g | Kartoffelpulver [Partikelgröße D50: 329 µm Bezugsquelle: KMC] |
| 8 g | Aerosil^{®} [pyrogene Kieseläure, spez. Oberfläche 200 +/- 5 m²/g; Bezugsquelle: Degussa] |

968 g Kartoffelpulver werden in einen 5 Liter Lödige Pflugscharmischer vorgelegt, 10 Sekunden vorgemischt und fluidisiert. Ohne Unterbrechung des Mischprozesses wird mittels einer Ein- oder Zweistoffdüse 40 g Sonnenblumenöl (Ölaerosol) auf das fluidisierte Kartoffelpulver gesprüht und anschließend 180 Sekunden nachgemischt. Ohne Unterbrechung des Mischprozesses werden anschließend 1000 g Speisesalz Extrafein zu der Mischung gegeben und die gesamte Mischung weitere 180 Sekunden gemischt bevor zuletzt 8 g des Fließhilfsmittels Aerosil^{®} zugegeben und 30 Sekunden nachgemischt werden.

### Beispiel 4

| | |
|---|---|
| 1000 g | Speisesalz Extrafein [enthält 0,5 Gew.-% Tricalciumphosphat und 8 mg E536; Partikelgröße D90: 31 µm. Bezugsquelle: Akzo Nobel] |
| 28 g | Sonnenblumenöl (mit Reaktionsaroma Typ Fried Corn) |
| 968 g | Maisgrieß [Partikelgröße D50: 368 µm Bezugsquelle: Wesermühle] |
| 4 g | Aerosil^{®} [pyrogene Kieseläure, spez. Oberfläche 200 +/- 5 m²/g; Bezugsquelle: Degussa] |

Die Herstellung erfolgte analog zu Beispiel 3.

### Beispiel 5

| | |
|---|---|
| 1000 g | Speisesalz Extrafein [enthält 0,5 Gew.-% Tricalciumphosphat und 8 mg K₄Fe(CN)₄ E536; Partikelgröße D90: 31 µm. Bezugsquelle: Akzo Nobel] |
| 30 g | Reiskeimöl (enthaltend Reaktionsaroma Typ Fried Rice) |
| 962 g | Vorgelatinisiertes Reisgranulat [Partikelgröße D50: 305 µm; Bezugsquelle: Rickmers Reismühle] |
| 8 g | Weizenfaser [mikrofeine Weizenfaser, Partikelgröße D90: 30µm; Bezugsquelle: JRS] |

Die Herstellung erfolgte analog zu Beispiel 3, wobei das Fließhilfsmittel Aerosil^{®} durch Weizenfaser ersetzt wurde.

### Beispiel 6

| | |
|---|---|
| 1000 g | Speisesalz Extrafein [enthält 0,5 Gew.-% Tricalciumphosphat und 8 mg K₄Fe(CN)₄ E536; Partikelgröße D90: 31 µm. Bezugsquelle: Akzo Nobel] |
| 35 g | Aromatisiertes Sojaöl Typ "Brotkruste" |
| 957 g | Instant Weizengriess [Partikelgröße D50: 319 µm; Bezugsquelle: Wesermühle] |
| 8 g | Weizenfaser [mikrofeine Weizenfaser, Partikelgröße D90: 30µm; Bezugsquelle: JRS] |

Die Herstellung erfolgte analog zu Beispiel 3, wobei das Fließhilfsmittel Aerosil^{®} durch Weizenfaser ersetzt wurde.

### Beispiel 7

| | |
|---|---|
| 1000 g | Speisesalz Extrafein [enthält 1 Gew.-% Siliciumdioxid E551 und 8 mg K₄Fe(CN)₄ E536; Partikelgröße D90: 34 µm. Bezugsquelle: Akzo Nobel] |
| 28 g | Reaktionsaroma Typ Kartoffel gekocht in Mygliol (ein MCT-Öl) |
| 966 g | Kartoffelpulver mittelgrob [Partikelgröße D50: 467 µm; Bezugsquelle: Unilever] |
| 6 g | Aeromyl [physikalisch modifizierte Kartoffelstärke, Partikelgröße Retsch Analysensieb nach DIN 4188: mind. 95% < 1 mm; Bezugsquelle: Südstärke] |

Die Herstellung erfolgte analog zu Beispiel 3, wobei das Fließhilfsmittel Aerosil^{®} durch Aeromyl ersetzt wurde.

### Anwendungsbeispiel 1: Würzmischung für Kartoffelchips 30 % Salz-reduziert

| **Bestandteil** | **Vergleichswürzmischung a** | **Vergleichsa würzmischung b** | **erfindungsgemäße Würzmischung A** |
|---|---|---|---|
| Natriumglutamat | 3,50 g | 3,50 g | 3,50 g |
| Käsepulver | 10,00 g | 10,00 g | 10,00 g |
| Knoblauchpulver | 2,00 g | 2,00 g | 2,00 g |
| Molkenpulver | 38,86 g | 45,86 g | 38,86 g |
| Würzextraktöl | 0,20 g | 0,20 g | 0,20 g |
| Paprikapulver | 9,80 g | 9,80 g | 9,80 g |
| Kochsalz | 21,00 g | 14,00 g | 7,00g |
| Tomatenpulver | 9,00 g | 9,00 g | 9,00 g |
| Trockenaroma | 2,50 g | 2,50 g | 2,50 g |
| Siliciumdioxid | 0,02 g | 0,02 g | 0,02 g |
| Pflanzenöl | 0,02 g | 0,02 g | 0,02 g |
| Zwiebelpulver | 3,00 g | 3,00 g | 3,00 g |
| Sahne Aromakonzentrat | 0,03 g | 0,03 g | 0,03 g |
| Käse Aroma | 0,03 g | 0,03 g | 0,03 g |
| Tomaten Aromakonzentrat | 0,04 g | 0,04 g | 0,04 g |
| **Erfindungsgemäße Zusammensetzung aus Beispiel 3** | | | 14,00 g |

6 g der Würzmischung wurden auf 94 g Kartoffelchips aufgezogen. Die Bewertung der Salzigkeit erfolgte in einem Sensorikpanel anhand eines Intensitätsvergleiches der Salzigkeit.

| | **Vergleichswürzmischung a** | **Vergleichswürzmischung b** | **erfindungsgemäße Würzmischung A** |
|---|---|---|---|
| Salzigkeit (0-9) | 3,6 ± 0,6 | 2,3 ± 0,8 | 4,2 ± 0,6 |

### Anwendungsbeispiel 2: Würzmischung für Kartoffelchips 50 % Salz-reduziert

| **Bestandteil** | **Vergleichswürzmischung a** | **Vergleichswürzmischung c** | **erfindungsgemäße Würzmischung B** |
|---|---|---|---|
| Natriumglutamat | 3,50 g | 3,50 g | 3,50 g |
| Käsepulver | 10,00 g | 10,00 g | 10,00 g |
| Knoblauchpulver | 2,00 g | 2,00 g | 2,00 g |
| Molkenpulver | 38,86 g | 50,36 g | 38,86 g |
| Würzextraktöl | 0,20 g | 0,20 g | 0,20 g |
| Paprikapulver | 9,80 g | 9,80 g | 9,80 g |
| Kochsalz | 21,00 g | 11,50 g | |
| Tomatenpulver | 9,00 g | 9,00 g | 9,00 g |
| Trockenaroma | 2,50 g | 2,50 g | 2,50 g |
| Siliciumdioxid | 0,02 g | 0,02 g | 0,02 g |
| Pflanzenöl | 0,02 g | 0,02 g | 0,02 g |
| Zwiebelpulver | 3,00 g | 3,00 g | 3,00 g |
| Sahne Aromakonzentrat | 0,03 g | 0,03 g | 0,03 g |
| Käse Aroma | 0,03 g | 0,03 g | 0,03 g |
| Tomaten Aromakonzentrat | 0,04 g | 0,04 g | 0,04 g |
| **Erfindungsgemäße Zusammensetzung aus Beispiel 2** | | | 21,00 g |

6 g der Würzmischung wurden auf 94 g Kartoffelchips aufgezogen. Die Bewertung der Salzigkeit erfolgte analog zu Anwendungsbeispiel 1.

| | **Vergleichswürzmischung a** | **Vergleichswürzmischung b** | **erfindungsgemäße Würzmischung B** |
|---|---|---|---|
| Salzigkeit (0-9) | 3,6 ± 0,6 | 1,8 ± 0,8 | 3,8 ± 0,6 |

### Anwendungsbeispiel 3: Würzmischung für Kartoffelchips 70 % Salz-reduziert

| **Bestandteil** | **Vergleichswürzmischung d** | **Vergleichswürzmischung e** | **erfindungsgemäße Würzmischung C** |
|---|---|---|---|
| Natriumglutamat | 5,00 g | 5,00 g | 5,00 g |
| Maltodextrin | 18,70 g | 35,2 g | 28,7 g |
| Dextrose | 5,00 g | 5,00 g | 5,00 g |
| Zwiebelpulver | 1,00 g | 1,00 g | 1,00 g |
| Würzextraktöl | 0,50 g | 0,50 g | 0,50 g |
| Paprikapulver | 16,00 g | 16,00 g | 16,00 g |
| Kochsalz | 23,00 g | 6,50 g | |
| Trockenaroma Schinken- speck | 16,00 g | 16,00 g | 16,00 g |
| Trockenaroma Zwiebel | 0,30 g | 0,30 g | 0,30 g |
| Magnesiumhydroxidcarbonat | 0,50 g | 0,50 g | 0,50 g |
| Zucker | 11,00 g | 11,00 g | 11,00 g |
| Hefeextrakt | 3,00 g | 3,00 g | 3,00 g |
| **Erfindungsgemäße Zusammensetzung aus Beispiel 3** | | | 13,00 g |

6 g der Würzmischung wurden auf 94 g Kartoffelchips aufgezogen. Die Bewertung der Salzigkeit erfolgte analog zu Anwendungsbeispiel 1.

| | **Vergleichswürzmischung d** | **Vergleichswürzmischung e** | **Erfindungsgemäße Würzmischung C** |
|---|---|---|---|
| Salzigkeit (0-9) | 3,6 ± 0,6 | 1,4 ± 0,8 | 3,4 ± 0,6 |

### Anwendungsbeispiel 4: Kartoffelchips, 30%,Salz-reduziert

| **Bestandteil** | **Vergleichswürzmischung f** | **Vergleichswürzmischung g** | **Erfindungsgemäßes Lebensmittel D** |
|---|---|---|---|
| Kochsalz | 1,50 g | 1,00 g | |
| Kartoffelchips | 98,50 g | 99,00 g | 98,00 g |
| **Erfindungsgemäße Zusammensetzung aus Beispiel 2** | | | 2,00 g |

Das Salz bzw. das Stoffgemisch wurde auf die Kartoffelchips aufgezogen. Die Bewertung der Salzigkeit erfolgte analog zu Anwendungsbeispiel 1.

| | **Vergleichswürzmischung f** | **Vergleichswürzmischung g** | **erfindungsgemäße Würzmischung D** |
|---|---|---|---|
| Salzigkeit (0-9) | 4,2 ± 0,4 | 2,9 ± 0,8 | 4,3 ± 0,6 |

### Anwendungsbeispiel 5: Kartoffelchips, 50% Salz-reduziert

| **Bestandteil** | **Vergleichswürzmischung f** | **Vergleichswürzmischung h** | **Erfindungsgemäßes Lebensmittel E** |
|---|---|---|---|
| Kochsalz | 1,50 g | 0,75 g | |
| Kartoffelchips | 98,50 g | 99,25 g | 98,50 g |
| **Erfindungsgemäße Zusammensetzung aus Beispiel 2** | | | 1,50 g |

Das Salz bzw. das Stoffgemisch wurde auf die Kartoffelchips aufgezogen. Die Bewertung der Salzigkeit erfolgte analog zu Anwendungsbeispiel 1.

| | **Vergleichswürzmischung f** | **Vergleichswürzmischung h** | **Erfindungsgemäße Würzmischung E** |
|---|---|---|---|
| Salzigkeit (0-9) | 4,2 ± 0,4 | 2,3 ± 0,7 | 3,9 ± 0,5 |

### Anwendungsbeispiel 6: Kartoffelchips, 66% Salz-reduziert

| **Bestandteil** | **Vergleichswürzmischung f** | **Vergleichswürzmischung i** | **Erfindungsgemäßes Lebensmittel F** |
|---|---|---|---|
| Kochsalz | 1,50 g | 0,50 g | |
| Kartoffelchips | 98,50 g | 99,5 g | 99,00 g |
| **Erfindungsgemäße Zusammensetzung aus 2** | | | 1,00 g |

Das Salz bzw. das Stoffgemisch wurde auf die Kartoffelchips aufgezogen. Die Bewertung der Salzigkeit erfolgte analog zu Anwendungsbeispiel 1.

| | **Vergleichswürzmischung f** | **Vergleichswürzmischung i** | **Erfindungsgemäße Würzmischung F** |
|---|---|---|---|
| Salzigkeit (0-9) | 4,2 ± 0,4 | 1,8 ± 0,7 | 3,5 ± 0,3 |

### Anwendungsbeispiel 7: Pommes Frites, 50% salzreduziert

| **Bestandteil** | **Vergleichswürzmischung j** | **Vergleichswürzmischung k** | **erfindungsgemäßes Lebensmittel G** |
|---|---|---|---|
| Kochsalz | 1,10 g | 0,55 g | |
| Pommes Frites, frisch frittiert | 98,90 g | 99,45 g | 98,90 g |
| **Erfindungsgemäße Zusammensetzungen aus Beispiel 7** | | | 1,10 g |

Die Pommes Frites Rohlinge wurden gemäß der Vorgabe frittiert. Dann wurden sie eingewogen und das Kochsalz bzw. Stoffgemisch über die Pommes gestreut. Danach wurden sie 3 bis 5-mal umgeschüttet, um das Salz bzw. Stoffgemisch homogen zu verteilen. Die Bewertung der Salzigkeit erfolgte in einem Konsumentenpanel analog zu Anwendungsbeispiel 1.

| | **Vergleichswürzmischung j** | **Vergleichswürzmischung k** | **Erfindungsgemäße Würzmischung G** |
|---|---|---|---|
| Salzigkeit (0-9) | 3,8 ± 0,6 | 2,2 ± 0,7 | 3,7 ± 0,7 |

### Anwendungsbeispiel 8: Würzmischung für Taco Chips, 50% salzreduziert

| **Bestandteil** | **Vergleichswürzmischung l** | **Vergleichswürzmischung m** | **erfindungsgemäße Würzmischung H** |
|---|---|---|---|
| Maltodextrin | 13,50 g | 24,50 g | 13,50 g |
| Salz | 22,00 g | 11,00 g | |
| Natriumglutamat | 6,00 g | 6,00 g | 6,00 g |
| Hefeextrakt | 4,00 g | 4,00 g | 4,00 g |
| Pfeffer, weiß | 0,02 g | 0,02 g | 0,02 g |
| Zwiebelpulver | 1,50 g | 1,50 g | 1,50 g |
| Trockenaroma Typ Chili Con Carne | 30,00 g | 30,00 g | 30,00 g |
| Trockenaroma Typ Mexikanisch | 9,50 g | 9,50 g | 9,50 g |
| Zucker | 13,5 g | 13,5 g | 13,5 g |
| **Erfindungsgemäße Zusammensetzung aus Beispiel 4** | | | 22,00 g |

8 g der Würzmischung wurden auf 92 g frittierte Taco Chips gleichmäßig aufgetragen. Die Bewertung erfolgte anhand Anwendungsbeispiel 1.

| | **Vergleichswürzmischung l** | **Vergleichswürzmischung m** | **Erfindungsgemäße Würzmischung H** |
|---|---|---|---|
| Salzigkeit (0-9) | 4,6 ± 1,3 | 2,8 ± 0,5 | 4,5 ± 0,7 |

### Anwendungsbeispiel 9: Weizencracker, salzreduziert

| **Bestandteil** | **Vergleichswürzmischung n** | **Vergleichswürzmischung o** | **Erfindungsgemäßes Lebensmittel l** |
|---|---|---|---|
| Kochsalz | 1,50 g | 0,75 g | |
| Sonnenblumenöl | 10,0 g | 10,0 g | 10,0 g |
| Weizencracker | 88,50 g | 89,25 g | 88,50 g |
| **Erfindungsgemäße Zusammensetzung aus Beispiel 6** | | | 1,5 g |

Das Sonnenblumenöl wurde erhitzt und unter Tumbeln auf die Weizencracker aufgezogen. Dann wurde das Kochsalz bzw. das Stoffgemisch gemäß Beispiel VI auf die Cracker aufgetragen. Die Bewertung erfolgte analog zu Anwendungsbeispiel 1.

| | **Vergleichswürzmischung n** | **Vergleichswürzmischung o** | **Erfindungsgemäßes Lebensmittel l** |
|---|---|---|---|
| Salzigkeit (0-9) | 3,5 ± 1,0 | 1,2 ± 0,3 | 3,4 ± 0,7 |

### Anwendungsbeispiel 10: Kartoffelchips mit Röstschinkenaroma, salzreduziert

Die Gewürzmischung "Röstschinkenaroma" enthält 32% Kochsalz und hat einen Natriumgehalt von 14% durch die Anwesenheit weitere Natriumquellen in der Rezeptur. Sie wird üblicherweise mit einer Dosierung von 6% auf Kartoffelchips aufgezogen und erweckt dort mit einem Natriumgehalt von 0,84% einen sehr salzigen Eindruck. In der vorliegenden Studie sollte der Natriumgehalt des mit Röstschinkenaroma versehenen Kartoffelchips halbiert werden, indem das Natriumchlorid reduziert wurde.

Die modifizierte Gewürzmischung wurde ebenfalls mit 6% auf die Kartoffelchips aufgezogen und in einem Expertenpanel mittels Deskriptoranalyse bewertet:

| | Röstschinkenaroma auf Kartoffelchips 0,84% Natrium (nicht erfindungsgemäß) | Röstschinkenaroma auf Kartoffelchips 0,42% Natrium (nicht erfindungsgemäß) | Röstschinkenaroma auf Kartoffelchips 0,42% Natrium enthaltend Partikel aus Beispiel 3 (erfindungsgemäß) |
|---|---|---|---|
| Rauchig | 7 | 5 | 6,8 |
| Schinken | 6 | 3,8 | 5,8 |
| Süss | 3 | 2 | 2,8 |
| Salzig | 7 | 4,1 | 7 |
| Umami | 6 | 4 | 5,5 |
| Zwiebel | 4 | 3,8 | 4 |
| Salzigkeit | 7,2 ± 0,9 | 4,15 ± 0,6 | 7,1 ± 0,7 |

So wurde gefunden, dass bei einer Salzreduktion nicht erfindungsgemäßer Zubereitungen nicht nur der Deskriptor "salzig" an Intensität verliert, sondern auch alle anderen Geschmacksdeskriptoren in ihrer Intensität nachlassen. Durch die vorliegende Erfindung konnten für erfindungsgemäße Zusammensetzungen und Lebensmittel sämtliche Deskriptoren auch bei halbierter Natriummenge annähernd wieder auf das Niveau der vollen Natriummenge zurückgeführt werden.

Die Bewertung der Salzigkeit erfolgte analog zu Anwendungsbeispiel 1.

Auch für die weiteren Deskriptoren gilt, je höher der Zahlenwert, desto intensiver die sensorische Wahrnehmung des Deskriptors.

## Patentansprüche

1. Frei fließende Zusammensetzung umfassend oder bestehend aus folgenden Bestandteilen:
a) einem oder mehreren zum Verzehr geeigneten festen Kernpartikeln,
b) einem oder mehreren zum Verzehr geeigneten fetten Ölen, welche den oder die Kernpartikel ganz oder teilweise benetzt und
c) zum Verzehr geeignetes Salz umfassend oder bestehend aus Natriumchlorid, das auf der Oberfläche des oder der mit fettem Öl benetzten Kernpartikel anhaftet.

2. Zusammensetzung nach Anspruch 1 zusätzlich umfassend oder bestehend aus folgenden Bestandteilen:
d) einem oder mehreren Fließmitteln und/oder
e) Aroma.

3. Zusammensetzung nach Anspruch 1 oder 2, **dadurch gekennzeichnet, dass**
- der oder die Kernpartikel gemäß Bestandteil a) zu 20 bis 80 Gew.-%, und/oder
- der oder die fetten Öle gemäße Bestandteil b) zu 0,2 bis 10 Gew.-%, und/oder
- das Salz gemäß Bestandteil c) zu 10 bis 75 Gew.-%, und/oder
- der oder die Fließmittel gemäß Bestandteil d) zu 0 bis 2 Gew.-%, und/oder
- Aroma gemäß Bestandteil e) zu 0 bis 10 Gew.-%,
jeweils bezogen auf die Trockenmasse der Zusammensetzung vorliegen.

4. Zusammensetzung nach einem der Ansprüche 1 bis 3, **dadurch gekennzeichnet, dass** der oder die Kernpartikel gemäß Bestandteil a) ausgewählt werden aus der Gruppe bestehend aus getrockneten und gemahlenen Lebensmitteln; Gemüsepulver wie Kartoffelpulver; Pulver von Maniok; Tapioka; Getreidepulver, insbesondere von Hafer, Weizen, Mais und/oder Hirse; Ballaststoffen; Mineralstoffen; festen (kristalline) Fetten; festen (kristalline) Wachsen; kristalline Zucker und/oder Fruchtpulver.

5. Zusammensetzung nach einem der Ansprüche 1 bis 4, **dadurch gekennzeichnet, dass** der oder die Kernpartikel aus Bestandteil a) einen Partikeldurchmesser mit einem D50-Wert im Bereich von 200 bis 750 µm aufweisen.

6. Zusammensetzung nach einem der Ansprüche 1 bis 5, **dadurch gekennzeichnet, dass** der oder die fetten Öle gemäß Bestandteil b) ausgewählt werden aus Triglyceriden mit gleichen oder verschiedenen C₄- C₁₈-Fettsäure-Resten.

7. Zusammensetzung nach einem der Ansprüche 1 bis 6, **dadurch gekennzeichnet, dass** Salz gemäß Bestandteil c) zu 97 Gew.-% oder mehr Natriumchlorid umfasst, bezogen auf die Trockenmasse des Salzes.

8. Zusammensetzung nach einem der Ansprüche 1 bis 7, **dadurch gekennzeichnet, dass** das Salz gemäß Bestandteil c) einen Partikeldurchmesser mit einem D90-Wert im Bereich von 20 bis 50 µm aufweist.

9. Zusammensetzung nach einem der Ansprüche 1 bis 8, **dadurch gekennzeichnet, dass** der oder die Fließmittel gemäß Bestandteil d) ausgewählt werden aus Magnesiumoxid, Na-, K- und/oder Ca-Verbindungen der Speisefettsäuren, Magnesiumstearat, Kieselsäuren, Calcium-Silikaten, Tricalciumphosphat, Carboxymethylcellulosen und/oder mikrofeine Pflanzenfasern.

10. Zusammensetzung nach einem der Ansprüche 1 bis 9, **dadurch gekennzeichnet, dass** Aroma gemäß Bestandteil e) ausgewählt wird aus synthetischen, natürlichen oder naturidentischen Aroma-, Riech- und/oder Geschmacksstoffen sowie deren Gemische, ätherischen Ölen, Reaktionsaromen, Raucharomen und/oder anderen aromagebenden Zubereitungen.

11. Verfahren zur Herstellung von frei fließenden Zusammensetzungen gemäß einem der Ansprüche 1 bis 10 umfassend oder bestehend aus folgenden Schritten:
i) Bereitstellen von ein oder mehreren Kernpartikeln als Bestandteil a), ein oder mehreren fetten Ölen als Bestandteil b) und zum Verzehr geeignetes Salz umfassend oder bestehend aus Natriumchlorid als Bestandteil c)
und
ii) Vorlegen und Fluidisieren von den Kernpartikeln gemäß Bestandteil a) in einen Mischer,
iii) Zuführen von dem oder den fetten Ölen gemäß Bestandteil b) in den Mischer, so dass die Kernpartikel ganz oder teilweise benetzt werden und
iv) Zuführen des Salzes gemäß Bestandteil c) in den Mischer, so dass das Salz zumindest teilweise auf der Oberfläche der mit fettem Öl benetzten Kernpartikel aus Schritt iii) anhaftet
oder
v) Vorlegen und Fluidisieren von den Kernpartikeln gemäß Bestandteil a) und dem Salz gemäß Bestandteil c) in einen Mischer und
vi) Zuführen von dem oder den fetten Ölen gemäß Bestandteil b) in den Mischer, so dass die Kernpartikel ganz oder teilweise benetzt werden und das Salz zumindest teilweise auf der Oberfläche der mit fettem Öl benetzten Kernpartikel anhaftet.

12. Verfahren nach Anspruch 11, **dadurch gekennzeichnet, dass** zusätzlich ein oder mehrere Fließmittel als Bestandteil d) und/oder Aroma als Bestandteil e) bereitgestellt werden und
- das Aroma gemäß Bestandteil e) mit dem oder den fetten Ölen gemäß Bestandteil b) gemischt werden, bevor das fette Öl gemäß Schritt iii) oder vi) dem Mischer zugeführt wird und/oder
- die Fließmittel gemäß Bestandteil d) mit den in Schritt iv) oder vi) erhaltenen Zusammensetzungen gemischt werden.

13. Lebensmittel umfassend oder bestehend aus Zusammensetzungen gemäß einem der Ansprüche 1 bis 10.

14. Verwendung einer Zusammensetzung gemäß einem der Ansprüche 1 bis 10 zur Herstellung von Lebensmitteln.

15. Verwendung einer Zusammensetzung gemäß einem der Ansprüche 1 bis 10 zur Reduzierung eines Natriumchloridgehaltes in Lebensmitteln.

## Claims

1. Free-flowing composition comprising or consisting of the following constituents:
a) one or more solid core particles suitable for consumption,
b) one or more fatty oils suitable for consumption which wholly or partly wet the core particle(s), and
c) salt suitable for consumption which comprises or consists of sodium chloride and which adheres to the surface of the core particle(s) wetted with fatty oil.

2. Composition according to claim 1, additionally comprising or consisting of the following constituents:
d) one or more flow promoters and/or
e) aroma.

3. Composition according to claim 1 or 2, **characterised in that**
- 20 to 80 wt.% of the core particle(s) according to constituent a), and/or
- 0.2 to 10 wt.% of the fatty oil(s) according to constituent b), and/or
- 10 to 75 wt.% of the salt according to constituent c), and/or
- 0 to 2 wt.% of the flow promoter(s) according to constituent d), and/or
- 0 to 10 wt.% of aroma according to constituent e)
are present, relative in each case to the dry mass of the composition.

4. Composition according to one of claims 1 to 3, **characterised in that** the core particle(s) according to constituent a) are selected from the group consisting of dried and ground food products; vegetable powder such as potato powder; manioc powder; tapioca; cereal powder, in particular of oats, wheat, maize and/or millet; dietary fibre; minerals; solid (crystalline) fats; solid (crystalline) waxes; crystalline sugars and/or fruit powder.

5. Composition according to one of claims 1 to 4, **characterised in that** the core particle(s) of constituent a) have a particle diameter with a D50 value in the range from 200 to 750 µm.

6. Composition according to one of claims 1 to 5, **characterised in that** the fatty oil(s) according to constituent b) are selected from triglycerides with the same or different C₄-C₁₈ fatty acid radicals.

7. Composition according to one of claims 1 to 6, **characterised in that** salt according to constituent c) comprises up to 97 wt.% or more of sodium chloride, relative to the dry mass of the salt.

8. Composition according to one of claims 1 to 7, **characterised in that** the salt according to constituent c) has a particle diameter with a D90 value in the range from 20 to 50 µm.

9. Composition according to one of claims 1 to 8, **characterised in that** the flow promoter(s) according to constituent d) are selected from magnesium oxide, Na, K and/or Ca compounds of edible fatty acids, magnesium stearate, silicas, calcium silicates, tricalcium phosphate, carboxymethyl celluloses and/or microfine vegetable fibres.

10. Composition according to one of claims 1 to 9, **characterised in that** aroma according to constituent e) is selected from synthetic, natural or nature-identical aromatic, odorous and/or flavouring substances and mixtures thereof, essential oils, reaction aromas, smoke aromas and/or other aroma-imparting preparations.

11. Process for preparing free-flowing compositions according to one of claims 1 to 10 comprising or consisting of the following steps:
i) providing one or more core particles as constituent a), one or more fatty oils as constituent b) and salt suitable for consumption comprising or consisting of sodium chloride as constituent c)
and
ii) placing and fluidising the core particles according to constituent a) in a mixer,
iii) supplying the fatty oil(s) according to constituent b) to the mixer so that the core particles are wholly or partly wetted and
iv) supplying the salt according to constituent c) to the mixer so that the salt adheres at least partly to the surface of the core particles from step iii) wetted with fatty oil
or
v) placing and fluidising the core particles according to constituent a) and the salt according to constituent c) in a mixer and
vi) supplying the fatty oil(s) according to constituent b) to the mixer so that the core particles are wholly or partly wetted and the salt adheres at least partly to the surface of the core particles wetted with fatty oil.

12. Process according to claim 11, **characterised in that** additionally one or more flow promoters as constituent d) and/or aroma as constituent e) are provided and
- the aroma according to constituent e) is mixed with the fatty oil(s) according to constituent b) before the fatty oil is supplied to the mixer according to step iii) or vi) and/or
- the flow promoters according to constituent d) are mixed with the compositions obtained in step iv) or vi).

13. Food product comprising or consisting of compositions according to one of claims 1 to 10.

14. Use of a composition according to one of claims 1 to 10 for preparing food products.

15. Use of a composition according to one of claims 1 to 10 for reducing a sodium chloride content in food products.

## Revendications

1. Composition s'écoulant librement, comprenant ou formée des constituants suivants:
a) une ou plusieurs particules de coeur solide/s propre/s à la consommation,
b) une ou plusieurs huile/s grasse/s propre/s à la consommation qui mouille/nt totalement ou partiellement la ou les particule/s de coeur et
c) un sel propre à la consommation comprenant du ou formé de chlorure de sodium, qui adhère sur la surface de la ou des particule/s de coeur mouillée/s par l'huile grasse.

2. Composition selon la revendication 1, comprenant ou formée, en plus, des constituants suivants:
d) un ou plusieurs solvant/s et/ou
e) un arôme.

3. Composition selon la revendication 1 ou 2, **caractérisée par le fait que**
- la ou les particule/s de coeur conforme/s au constituant a) représente/nt à chaque fois entre 20 et 80 % en poids et/ou
- l'huile ou les huiles grasse/s conforme/s au constituant b) représente/nt à chaque fois entre 0,2 et 10 % en poids et/ou
- le sel conforme au constituant c) représente à chaque fois entre 10 et 75 % en poids et/ou
- le ou les solvant/s conforme/s au constituant d) représente/nt à chaque fois entre 0 et 2 % en poids et/ou
- l'arôme conforme au constituant e) représente à chaque fois entre 0 et 10 % en poids
de la masse sèche de la composition.

4. Composition selon l'une des revendications 1 à 3, **caractérisée par le fait que** la ou les particule/s de coeur conforme/s au constituant a) est/sont choisie/s dans le groupe comprenant des denrées alimentaires séchées et broyées; des poudres de légumes telles que la poudre de pomme de terre; la poudre de manioc; le tapioca; des poudres de céréales, notamment d'avoine, de blé, de maïs et/ou de millet; des fibres alimentaires; des matières minérales; des graisses (cristallines) solides; des cires (cristallines) solides; du sucre cristallisé et/ou des poudres de fruits.

5. Composition selon l'une des revendications 1 à 4, **caractérisée par le fait que** la ou les particule/s de coeur du constituant a) a/ont un diamètre de particule dont la valeur D50 est comprise entre 200 et 750 µm.

6. Composition selon l'une des revendications 1 à 5, **caractérisée par le fait que** l'huile ou les huiles grasse/s conforme/s au constituant b) est/sont choisie/s parmi des triglycérides à acides gras résiduels C₄-C₁₈ identiques ou différents.

7. Composition selon l'une des revendications 1 à 6, **caractérisée par le fait que** le sel conforme au constituant c) comprend au moins 97 % en poids de chlorure de sodium, mesuré par rapport à la masse sèche de sel.

8. Composition selon l'une des revendications 1 à 7, **caractérisée par le fait que** le sel conforme au constituant c) a un diamètre de particule dont la valeur D90 est comprise entre 20 et 50 µm.

9. Composition selon l'une des revendications 1 à 8, **caractérisée par le fait que** le ou les solvant/s conforme/s au constituant d) est/sont choisi/s parmi l'oxyde de magnésium, les composés de Na, K et/ou Ca des acides gras alimentaires, le stéarate de magnésium, les silices, les silicates de calcium, le triphosphate de calcium, les celluloses de carboxyméthyle et/ou des fibres végétales microfines.

10. Composition selon l'une des revendications 1 à 9, **caractérisée par le fait que** l'arôme conforme au constituant e) est choisi parmi des agents aromatiques, odoriférants et/ou de sapidité artificiels, naturels ou identiques au naturel, ainsi que leurs mélanges, des huiles éthériques, des arômes de réaction, des arômes de fumée et/ou d'autres préparations aromatisantes.

11. Procédé de fabrication de compositions s'écoulant librement selon l'une des revendications 1 à 10, comprenant ou formé des étapes suivantes:
i) fourniture d'une ou de plusieurs particule/s de coeur en tant que constituant a), d'une ou de plusieurs huile/s grasse/s en tant que constituant b) et de sel propre à la consommation comprenant ou formé de chlorure de sodium en tant que constituant c)
et
ii) présentation et fluidification des particules de coeur conforme/s au constituant a) dans un mélangeur,
iii) alimentation de l'huile ou des huiles grasse/s conforme/s au constituant b) dans le mélangeur de manière à ce que les particules de coeur soient mouillées, totalement ou partiellement, et
iv) alimentation du sel conforme au constituant c) dans le mélangeur, de manière à ce que le sel adhère, au moins partiellement, sur la surface des particules de coeur mouillées par l'huile grasse dans l'étape iii)
ou
v) présentation et fluidification des particules de coeur conforme/s au constituant a) et du sel conforme au constituant c) dans un mélangeur et
vi) alimentation de l'huile ou des huile/s grasse/s conforme/s au constituant b) dans le mélangeur, de manière à ce que les particules de coeur soient totalement ou partiellement mouillées et à ce que le sel adhère, au moins partiellement, sur la surface des particules de coeur mouillées par l'huile grasse.

12. Procédé selon la revendication 11, **caractérisé par le fait que** l'on fournit, en plus, un ou plusieurs solvant/s en tant que constituant d) et/ou un arôme en tant que constituant e) et
- l'arôme conforme au constituant e) est mélangé à l'huile ou aux huiles grasse/s conforme/s au constituant b) avant que l'huile grasse soit alimentée dans le mélangeur selon l'étape iii) ou vi) et/ou
- les solvants conforme/s au constituant d) sont mélangés aux compositions obtenues dans l'étape iv) ou vi).

13. Denrée alimentaire comprenant ou formée de compositions selon l'une des revendications 1 à 10.

14. Utilisation d'une composition selon l'une des revendications 1 à 10 pour la fabrication de denrées alimentaires.

15. Utilisation d'une composition selon l'une des revendications 1 à 10 pour réduire la teneur en chlore de sodium dans des denrées alimentaires.
